# EUROPEAN PATENT APPLICATION

(11) **EP 4 502 984 A1**
(43) Date of publication of application: **05.02.2025**
(21) Application number: 22935399.0
(22) Date of filing: 31.03.2022
(51) Int. Cl.: G08G 1/16, B60W 40/02, G01C 21/26

(54) **CONTROL DEVICE FOR MOVING BODY, CONTROL METHOD FOR MOVING BODY, AND STORAGE MEDIUM**

(71) Applicant: HONDA MOTOR CO., LTD., Minato-ku Tokyo 107-8556 (JP)
(72) Inventor: MATSUNAGA Hideki, Wako-shi, Saitama 351-0193 (JP); MATSUMOTO Takashi, Wako-shi, Saitama 351-0193 (JP); WAKAYAMA Ryoji, Wako-shi, Saitama 351-0193 (JP); AIZAWA Koki, Wako-shi, Saitama 351-0193 (JP); KURAMITSU Yunosuke, Wako-shi, Saitama 351-0193 (JP); SHIRAKATA Kento, Wako-shi, Saitama 351-0193 (JP)
(74) Representative: Weickmann & Weickmann PartmbB
(86) International application number: PCT/JP2022/016496
(87) International publication number: WO 2023/188254

(57) **Abstract**

A mobile object control device for a mobile object that is able to move both on a roadway and in a predetermined area other than a roadway includes: a road type recognizing unit configured to recognize whether the mobile object is moving on the roadway or in the predetermined area on the basis of map information in which features of the predetermined area are correlated with positions; and a control unit configured to limit a speed of the mobile object when the mobile object on the roadway to a first speed and to limit the speed of the mobile object when the mobile object moves in the predetermined area to a second speed lower than the first speed.

## Description

### [Technical Field]

The present invention relates to a mobile object control device, a mobile object control method, and a storage medium.

### [Background Art]

In the related art, a technique of detecting a walkway on the basis of an image captured by a camera mounted in a mobile object and generating walkway information on the detected walkway is known. For example, Patent Document 1 discloses a technique of adding walkway information on a walkway to existing road information indicating a roadway stored in a recording medium when the walkway has been detected on the basis of an image captured by a camera mounted in a vehicle.

### [Citation List]

### [Patent Document]

[Patent Document 1]
Japanese Unexamined Patent Application, First Publication No. 2020-160291

### [Summary of Invention]

### [Technical Problem]

However, in the related art, walkway information with high convenience for a mobile object that can travel on a roadway and a walkway may not be provided.

The present invention was made in consideration of the aforementioned circumstances, and an objective thereof is to provide a mobile object control device, a mobile object control method, and a storage medium that can provide walkway information with high convenience for a mobile object that can travel on a roadway and a walkway.

### [Solution to Problem]

A mobile object control device, a mobile object control method, and a storage medium according to the present invention employ the following configurations.
(1) A mobile object control device according to an aspect of the present invention includes: a road type recognizing unit configured to recognize whether a mobile object is moving on a roadway or in a predetermined area on the basis of map information in which features of the predetermined area are correlated with positions; and a control unit configured to limit a speed of the mobile object when the mobile object moves on the roadway to a first speed and to limit the speed of the mobile object when the mobile object moves in the predetermined area to a second speed lower than the first speed.
(2) The mobile object control device according to the aspect of (1) further includes a map updating unit configured to update the features of the predetermined area included in the map information when the features of the predetermined area included in the map information are different from features of the predetermined area sensed by an external sensing device at the time of movement of the mobile object.
(3) In the mobile object control device according to the aspect of (2), the map updating unit does not update the features of the predetermined area included in the map information when sensing accuracy of the external sensing device is equal to or less than a reference value.
(4) In the mobile object control device according to the aspect of (1), the map information includes information on a type or a width of the predetermined area as the features of the predetermined area.
(5) In the mobile object control device according to the aspect of (4), the control unit determines a route along which the mobile object moves on the basis of request information on the type or the width of the predetermined area and the map information when the request information input by an occupant of the mobile object is received.
(6) In the mobile object control device according to the aspect of (1), the map information includes information on an open space or a guardrail adjacent to the predetermined area as the features of the predetermined area.
(7) In the mobile object control device according to the aspect of (1), the map information includes information on a traversable boundary spot between the roadway and the predetermined area as the features of the predetermined area.
(8) A mobile object control method according to another aspect of the present invention is performed by a computer for controlling a mobile object that is able to move both on a roadway and in a predetermined area other than a roadway and includes: recognizing whether the mobile object is moving on the roadway or in the predetermined area on the basis of map information in which features of the predetermined area are correlated with positions; and limiting a speed of the mobile object when the mobile object moves on the roadway to a first speed and limiting the speed of the mobile object when the mobile object moves in the predetermined area to a second speed lower than the first speed.
(9) A storage medium according to another aspect of the present invention stores a program causing a computer for controlling a mobile object that is able to move both on a roadway and in a predetermined area other than a roadway to perform: recognizing whether the mobile object is moving on the roadway or in the predetermined area on the basis of map information in which features of the predetermined area are correlated with positions; and limiting a speed of the mobile object when the mobile object moves on the roadway to a first speed and limiting the speed of the mobile object when the mobile object moves in the predetermined area to a second speed lower than the first speed.

### [Advantageous Effects of Invention]

According to the aspects of (1) to (9), it is possible to provide walkway information with high convenience for a mobile object that can travel on a roadway and a walkway.

### [Brief Description of Drawings]

FIG. 1 is a diagram illustrating an example of a configuration of a mobile object and a control device according to an embodiment.
FIG. 2 is a perspective view of a mobile object from above.
FIG. 3 is a diagram illustrating a method of generating walkway map information 73 that is performed by a map generating unit 150.
FIG. 4 is another diagram illustrating the method of generating walkway map information 73 that is performed by the map generating unit 150.
FIG. 5 is a diagram illustrating an example of a configuration of walkway map information 73 stored in a storage device 70.
FIG. 6 is a diagram illustrating an example of a method of using walkway map information 73 for routing.
FIG. 7 is a flowchart illustrating an example of a process flow that is performed by a road type recognizing unit 120.

### [Description of Embodiments]

Hereinafter, a mobile object control device, a mobile object control method, and a program according to an embodiment of the present invention will be described with reference to the accompanying drawings. A mobile object can move both on a roadway and in a predetermined area other than a roadway. The mobile object may also be referred to as micromobility. An electric scooter is a type of micromobility. The predetermined area is, for example, a walkway. The predetermined area may be some or all of a roadside strip, a bicycle lane, and a public open space and may include all of a walkway, a roadside strip, a bicycle lane, and a public open space. In the following description, it is assumed that the predetermined area is a walkway. In the following description, "walkway" can be appropriately replaced with "predetermined area."

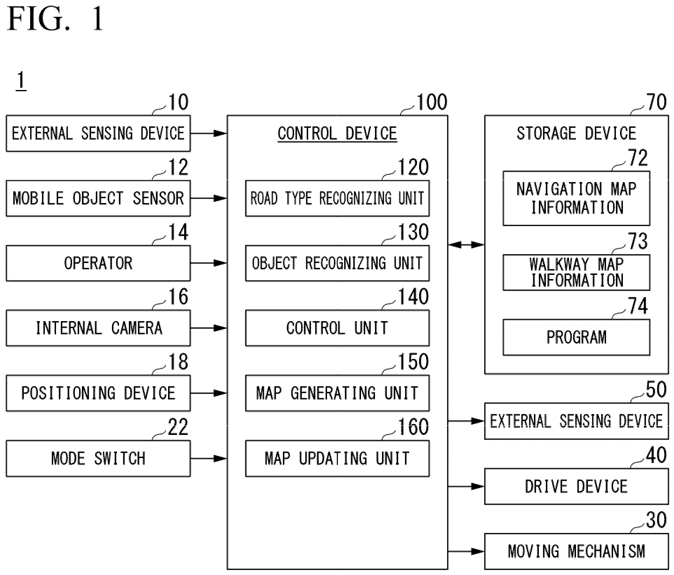

FIG. 1 is a diagram illustrating an example of a configuration of a mobile object 1 and a control device 100 according to an embodiment. The mobile object 1 is provided with, for example, an external sensing device 10, a mobile object sensor 12, an operator 14, an internal camera 16, a positioning device 18, a mode switch 22, a dial switch 24, a moving mechanism 30, a drive device 40, an external notification device 50, a storage device 70, and a control device 100. Some constituents which are not essential to realizing functions of the present invention out of these constituents may be omitted. The mobile object is not limited to a vehicle and may include micromobility for transporting luggage in parallel with a walking user or leading a person or may include other mobile objects that can move autonomously (for example, a walking robot).

The external sensing device 10 includes various devices that can sense areas in a moving direction of the mobile object 1. The external sensing device 10 includes an external camera, a radar device, a light detection and ranging (LIDAR) device, and a sensor fusion device. The external sensing device 10 outputs information indicating sensing results (such as an image and a position of an object) to the control device 100.

The mobile object sensor 12 includes, for example, a speed sensor, an acceleration sensor, a yaw rate (angular velocity) sensor, a direction sensor, and an operation amount sensor attached to the operator 14. The operator 14 includes, for example, an operator for instructing acceleration or deceleration (for example, an accelerator pedal or a brake pedal) and an operator for instructing steering (for example, a steering wheel). In this case, the mobile object sensor 12 may include an accelerator operation amount sensor, a brake operation amount sensor, and a steering torque sensor. The mobile object 1 may include an operator (for example, a rotary operator with a shape other than a ring shape, a joystick, or a button) other than the operator 14 described above.

The internal camera 16 images at least the head of an occupant of the mobile object 1 from the front. The internal camera 16 is a digital camera using an imaging device such as a charge-coupled device (CCD) or a complementary metal oxide semiconductor (CMOS). The internal camera 16 outputs the captured image to the control device 100.

The positioning device 18 is a device that measures a position of the mobile object 1. The positioning device 18 is, for example, a global navigation satellite system (GNSS) receiver that identifies the position of the mobile object 1 on the basis of signals received from GNSS satellites and outputs the identified position as position information. The position information of the mobile object 1 may be estimated from a position of a Wi-Fi base station to which a communication device which will be described later is connected.

The mode switch 22 is a switch that is operated by an occupant. The mode switch 22 may be a mechanical switch or may be a graphical user interface (GUI) switch that is set on a touch panel. For example, the mode switch 22 receives an operation of switching a driving mode to one of mode A that is an assist mode in which one of a steering operation and acceleration/deceleration control is performed by an occupant and the other thereof is automatically performed and that includes mode A-1 in which the steering operation is performed by an occupant and the acceleration/deceleration control is automatically performed and mode A-2 in which the acceleration/deceleration control is performed by an occupant and the steering control is automatically performed, mode B which is a manual driving mode in which the steering operation and the acceleration/deceleration operation are performed by an occupant, and mode C which is an automatic driving mode in which the steering control and the acceleration/deceleration control are automatically performed.

The moving mechanism 30 is a mechanism for moving the mobile object 1 on a road. The moving mechanism 30 is, for example, a wheel group including a turning wheel and a driving wheel. The moving mechanism 30 may be legs for multi-legged walking.

The drive device 40 moves the mobile object 1 by outputting a force to the moving mechanism 30. For example, the drive device 40 includes a motor that drives driving wheels, a battery that stores electric power to be supplied to the motor, and a steering device that adjusts a steering angle of turning wheels. The drive device 40 may include an internal combustion engine or a fuel cell as a driving force output means and a power generation means. The drive device 40 may further include a brake device using frictional force or air resistance.

The external notification device 50 is, for example, a lamp, a display device, or a speaker that is provided on an external plate member of the mobile object 1 and is used to notify the outside of the mobile object 1 of information. The external notification device 50 performs different operations in a state in which the mobile object 1 is moving on a walkway and a state in which the mobile object 1 is moving on a roadway. For example, the external notification device 50 is controlled such that the lamp emits light when the mobile object 1 is moving on the walkway and the lamp does not emit light when the mobile object 1 is moving on the roadway. An emission color of the lamp can be a color defined by law. The external notification device 50 may be controlled such that the lamp emits green light when the mobile object 1 is moving on the walkway and the lamp emits blue light when the mobile object 1 is moving on the roadway. When the external notification device 50 is a display device, the external notification device 50 displays a notification indicating "traveling on a walkway" in text or graphics when the mobile object 1 is traveling on the walkway.

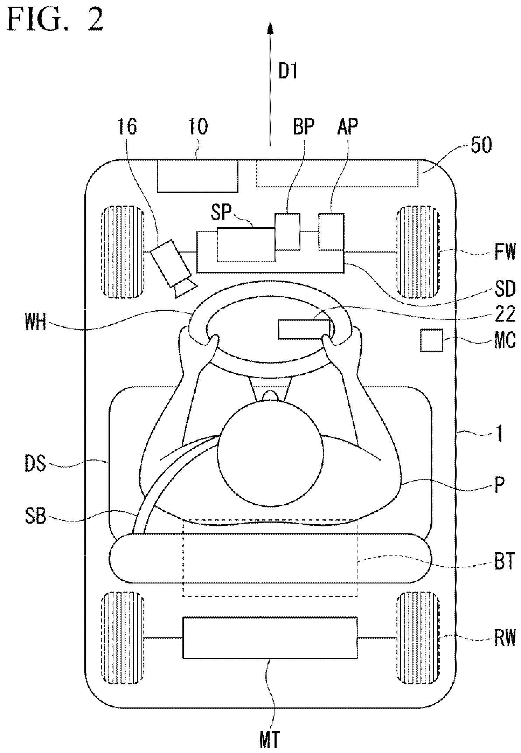

FIG. 2 is a perspective view of a mobile object 1 from above. In the drawing, FW denotes steering wheels, RW denotes driving wheels, SD denotes a steering device, MT denotes a motor, and BT denotes a battery. The steering device SD, the motor MT, and the battery BT are included in the drive device 40. AP denotes an accelerator pedal, BP denotes a brake pedal, WH denotes a steering wheel, SP denotes a speaker, and MC denotes a microphone. The mobile object 1 illustrated in the drawing is a single-seated mobile object, and an occupant P sits on a driver's seat DS and wears a seat belt SB. An arrow D1 is a traveling direction (a speed vector) of the mobile object 1. The external sensing device 10 is installed in the vicinity of the front end of the mobile object 1, the internal camera 16 is installed at a position at which the head of the occupant P can be imaged from the front of the occupant P, and the mode switch 22 is installed in a boss part of the steering wheel WH. The external notification device 50 is a display device provided in the vicinity of the front end of the mobile object 1.

Referring back to FIG. 1, the storage device 70 is, for example, a non-transitory storage device such as a hard disk drive (HDD), a flash memory, or a random access memory (RAM). Navigation map information 72, walkway map information 73, a program 74 that is executed by the control device 100, and the like are stored in the storage device 70. The storage device 70 is located outside of the control device 100 in the drawing, but the storage device 70 may be included in the control device 100. The storage device 70 may be provided in a server which is not illustrated.

### <First embodiment>

### [Control device]

The control device 100 includes, for example, a road type recognizing unit 120, an object recognizing unit 130, a control unit 140, a map generating unit 150, and a map updating unit 160. The road type recognizing unit 120, the object recognizing unit 130, the control unit 140, the map generating unit 150, and the map updating unit 160 are realized, for example, by causing a hardware processor such as a central processing unit (CPU) to execute the program (software) 74. Some or all of these constituent units may be realized by hardware (a circuit unit including circuitry) such as a large scale integration (LSI) device, an application-specific integrated circuit (ASIC), a field-programmable gate array (FPGA), or a graphics processing unit (GPU) or may be cooperatively realized by software and hardware. The program may be stored in the storage device 70 in advance or may be stored in a detachable storage medium (a non-transitory storage medium) such as a DVD or a CD-ROM and installed in the storage device 70 by setting the storage medium into a drive device.

The road type recognizing unit 120 recognizes whether the mobile object 1 is moving on a roadway or on a walkway. The road type recognizing unit 120 recognizes whether the mobile object 1 is moving on a roadway or on a walkway, for example, by analyzing an image captured by an external camera of the external sensing device 10. Outputs of the radar device, the LIDAR device, the sensor fusion device, or the like may be auxiliarily used.

The road type recognizing unit 120 compares position information of the mobile object 1 with the navigation map information 72 and/or the walkway map information 73 in addition to the image output from the external camera and recognizes whether the mobile object 1 is moving on a roadway or on a walkway. The navigation map information 72 is stored in the storage device 70 in advance and is, for example, map information including information of a road center including a roadway and a walkway or information of a road boundary. On the other hand, the walkway map information 73 is map information that is generated by the map generating unit 150 on the basis of the image captured by the external camera of the external sensing device 10 when the mobile object 1' moves, and details thereof will be described later.

The object recognizing unit 130 recognizes an object present near the mobile object 1 on the basis of an output of the external sensing device 10. The object includes some or all of mobile objects such as a vehicle, a bicycle, and a pedestrian, travel lane boundaries such as road markings, stepped parts, guardrails, curbstones, and median strips, structures installed on the road such as road markings or signboards, and obstacles such as objects present (fallen) on a travel lane. An acquisition unit 110 acquires information such as presence, a position, and a type of another mobile object by inputting an image captured by the external camera to a trained model which has been trained to output information such as presence, a position, and a type of an object when an image captured by the external camera of the external sensing device 10 is input thereto. A type of another mobile object may be estimated on the basis of a size in an image or intensities of reflected waves received by the radar device of the external sensing device 10. The acquisition unit 110 acquires, for example, a speed of another mobile object which has been detected using Doppler shift or the like by the radar device.

The control unit 140 controls, for example, the drive device 40 according to a set driving mode. The mobile object 1 may perform only some of the following driving modes, and the control unit 140 always sets a speed limit to different values when the mobile object 1 moves on a roadway and when the mobile object 1 moves on a walkway. In this case, the mode switch 22 may be omitted.

In mode A-1, the control unit 140 controls the motor MT of the drive device 40 with reference to information of a travel lane and an object based on an output of the object recognizing unit 130 such that a distance to an object present in front of the mobile object 1 is maintained to be equal to or greater than a predetermined value when the mobile object 1 moves on a roadway and the mobile object 1 moves at a first speed V1 (for example, a speed equal to or higher than 10 [km/h] and lower than several tens of [km/h]) when the distance to an object present in front of the mobile object 1 is sufficiently long. The control unit 140 controls the motor MT of the drive device 40 such that a distance to an object present in front of the mobile object 1 is maintained to be equal to or greater than a predetermined value when the mobile object 1 moves on a walkway and the mobile object 1 moves at a second speed V2 (for example, a speed lower than 10 [km/h]) when the distance to an object present in front of the mobile object 1 is sufficiently long. The relevant function is the same as an adaptive cruise control (ACC) function of a vehicle of which a speed has been set to the first speed V1 or the second speed V2, and a technique used in the ACC can be used. In mode A-1, the control unit 140 controls the steering device SD such that a steering angle of the turning wheels changes on the basis of an amount of operation of the operator 14 such as the steering wheel. The relevant function is the same as a function of a power steering device, and a technique used in the power steering device can be used. Instead of using electronic control for steering, the mobile object 1 may include a steering device in which the operator 14 and the steering mechanism are mechanically connected.

In mode A-2, the control unit 140 generates a target trajectory along which the mobile object 1 can move while avoiding an object in a travel lane with reference to information of the travel lane and the object based on the output of the object recognizing unit 130 and controls the steering device SD of the drive device 40 such that the mobile object 1 moves along the target trajectory. Regarding acceleration and deceleration, the control unit 140 controls the motor MT of the drive device 40 on the basis of a speed of the mobile object 1 and an amount of operation of the accelerator pedal or the brake pedal. The control unit 140 controls the motor MT of the drive device 40 with the first speed V1 as the upper speed limit (which means that the mobile object 1 is not accelerated in spite of an acceleration instruction when the mobile object reaches the upper speed limit in mode A-2) when the mobile object 1 moves in a roadway and controls the drive device 40 with the second speed V2 as the upper speed limit when the mobile object 1 moves on a walkway.

In mode B, the control unit 140 controls the motor MT of the drive device 40 on the basis of the speed of the mobile object 1 and the amount of operation of the accelerator pedal or the brake pedal. The control unit 140 controls the motor MT of the drive device 40 with the first speed V1 as the upper speed limit (which means that the mobile object 1 is not accelerated in spite of an acceleration instruction when the mobile object reaches the upper speed limit in mode B) when the mobile object 1 moves in a roadway and controls the motor MT of the drive device 40 with the second speed V2 as the upper speed limit when the mobile object 1 moves on a walkway.

In mode C, the control unit 140 generates a target trajectory along which the mobile object 1 can move while avoiding an object in a travel lane with reference to information of the travel lane and the object based on the output of the object recognizing unit 130 and controls the drive device 40 such that the mobile object 1 moves along the target trajectory. In mode C, the control unit 140 controls the drive device 40 with the first speed V1 as the upper speed limit when the mobile object 1 moves in a roadway and controls the drive device 40 with the second speed V2 as the upper speed limit when the mobile object 1 moves on a walkway.

### [Generation of walkway map information 73]

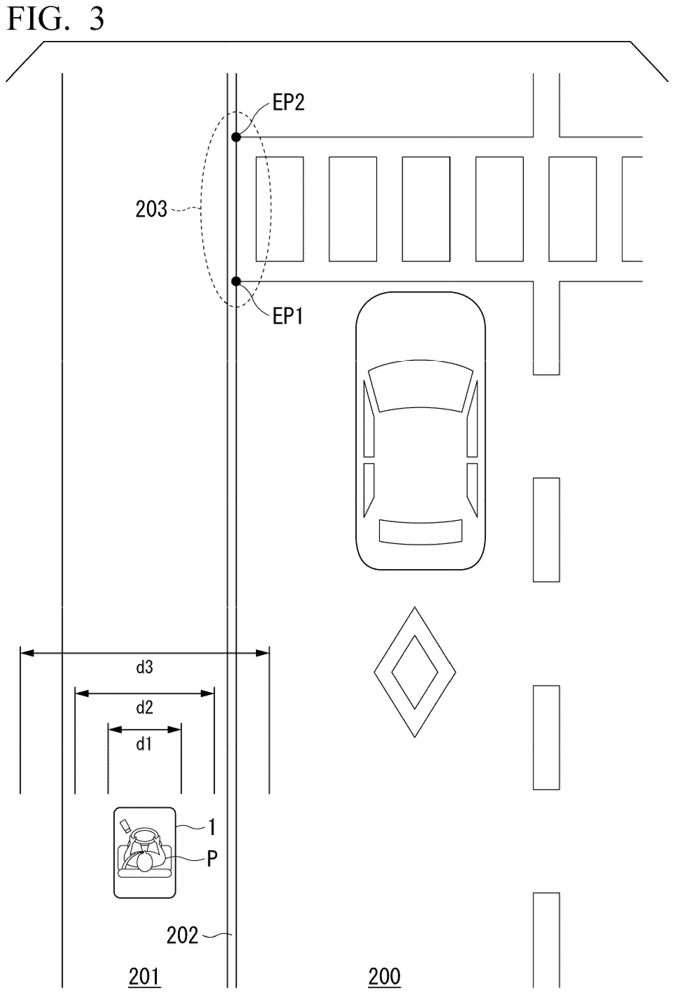

The map generating unit 150 generates the walkway map information 73 on the basis of an image captured by the external camera of the external sensing device 10 when the mobile object 1 moves. FIG. 3 is a diagram illustrating a method of generating the walkway map information 73 that is performed by the map generating unit 150. In FIG. 3, reference sign 200 denotes a roadway, and reference sign 201 denotes a walkway.

When the mobile object 1 travels and when the road type recognizing unit 120 recognizes that the mobile object 1 moves on the walkway, for example, on the basis of an image captured by the external camera of the external sensing device 10 or recognizes that the mobile object 1 moves on the walkway with reference to the navigation map information 72, the map generating unit 150 starts generation of the walkway map information 73 on the basis of the image captured by the external camera.

For example, the map generating unit 150 stores position information (for example, GPS coordinates) of the mobile object 1 at a timing at which it is recognized that the mobile object 1 has entered the walkway on the basis of an image captured by the external camera of the external sensing device 10 as coordinates of a start point of the walkway in the walkway map information 73. For example, the map generating unit 150 stores position information of the mobile object 1 at a timing at which it is recognized that the mobile object 1 exits the walkway on the basis of an image captured by the external camera as coordinates of an end point of the walkway in the walkway map information 73. That is, the walkway can be recognized to be a straight line connecting the coordinates of the start point and the coordinates of the end point. When it is determined that the steering angle of the turning wheels has changed by a threshold value or greater while the mobile object 1 is moving on the walkway on the basis of an output of the yaw rate sensor of the mobile object sensor 12, the map generating unit 150 may store the walkway as a curve indicated by a traveling trajectory instead of the straight line connecting the coordinates of the start point and the coordinates of the end point in the walkway map information 73.

The map generating unit 150 recognizes a type and a width of the walkway on the basis of an image captured by the external camera of the external sensing device 10 and stores the recognized type and width of the walkway in the walkway map information 73. The type of the walkway may be, for example, a type based on road materials such as asphalt, concrete, and gravel or a type based on legal classifications such as a roadside strip, a pedestrian walkway, and a bicycle/pedestrian walkway. The map generating unit 150 fits widths of a plurality of candidates to the width of the walkway recognized by the external camera and stores a width with a highest degree of matching as the width of the walkway in the walkway map information 73. For example, in FIG. 3, the map generating unit 150 fits a width d1, a width d2, and a width d3 to the walkway 201 and stores the width d2 with the highest degree of matching as the width of the walkway 201 in the walkway map information 73 as the width of the walkway 201. Accordingly, it is possible to decrease a processing load for generating the walkway map information 73 and to save a storage capacity of the storage device 70.

For example, the map generating unit 150 stores position information of the mobile object 1 at a timing at which a guardrail has been recognized on the basis of an image captured by the external camera of the external sensing device 10 as coordinates of a start point of the guardrail in the walkway map information 73. For example, the map generating unit 150 stores position information of the mobile object 1 at a timing at which ending of the guardrail has been recognized on the basis of an image captured by the external camera as coordinates of an end point of the guardrail in the walkway map information 73.

For example, the map generating unit 150 stores position information of a traversable boundary spot between the walkway and the roadway in the walkway map information 73 on the basis of an image captured by the external camera of the external sensing device 10. For example, in FIG. 3, the map generating unit 150 detects a pedestrian crossing as the traversable boundary spot on the basis of an image captured by the external camera and stores position information of the pedestrian crossing in the walkway map information 73. At this time, the map generating unit 150 may store position information of end points EP1 and EP2 of the pedestrian crossing in the walkway map information 73. The traversable boundary spot between the walkway and the roadway is not limited to a pedestrian crossing. For example, a spot at which a step difference of a curbstone decreases or a spot at which the guardrail stops may be detected as the traversable boundary spot.

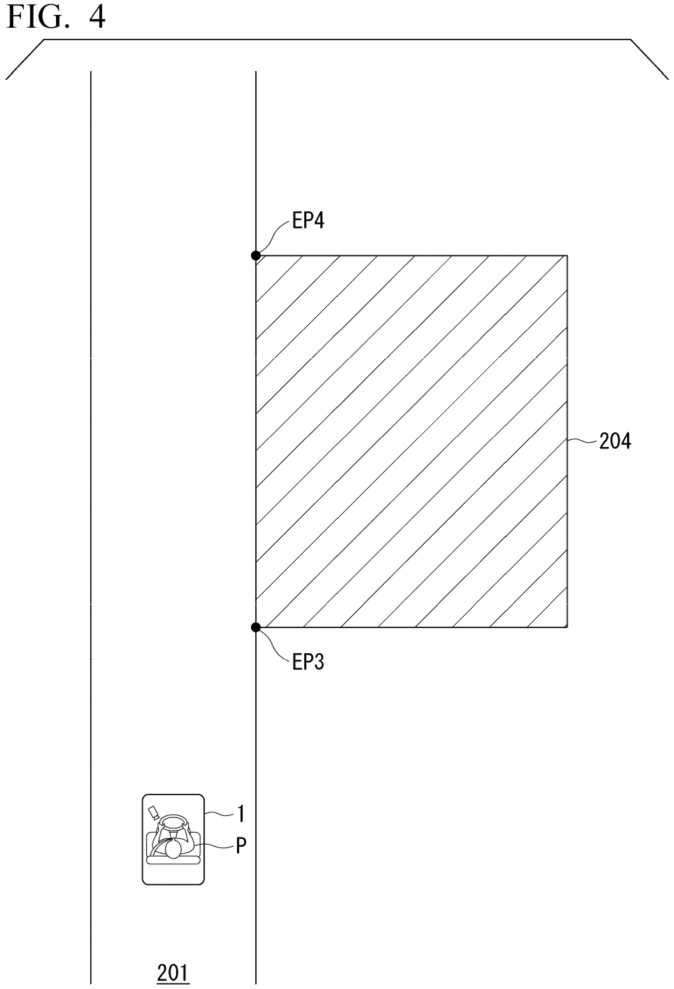

FIG. 4 is a diagram illustrating the method of generating the walkway map information 73 that is performed by the map generating unit 150. When a public open space 204 adjacent to the walkway is detected on the basis of an image captured by the external camera of the external sensing device 10, the map generating unit 150 stores position information of the public open space 204 in the walkway map information 73. For example, in FIG. 4, the map generating unit 150 detects the public open space 204 on the basis of an image captured by the external camera and stores position information of the public open space 204 in the walkway map information 73. At this time, the map generating unit 150 may store position information of end points EP3 and EP4 of the public open space 204 in the walkway map information 73. The map generating unit 150 may estimate an area of the public open space 204 on the basis of an image captured by the external camera and also store the estimated area in the walkway map information 73.

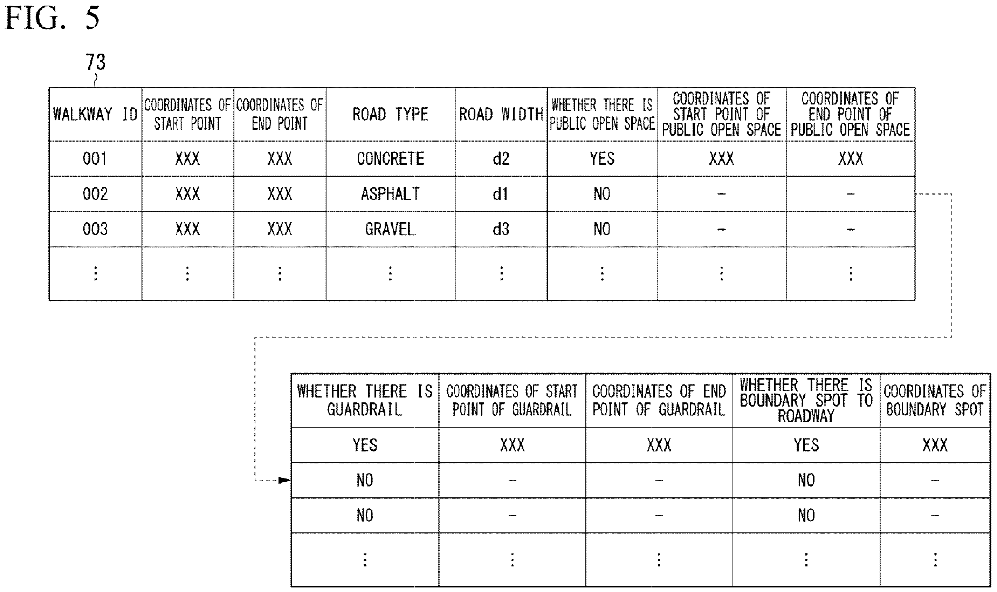

FIG. 5 is a diagram illustrating an example of a configuration of the walkway map information 73 stored in the storage device 70. As illustrated in FIG. 5, in the walkway map information 73, for example, a walkway ID is correlated with information such as coordinates of a start point, coordinates of an end point, a road type, a road width, whether there is a neighboring public open space, coordinates of a start point of the public open space, coordinates of an end point of the public open space, whether there is a guardrail, coordinates of a start point of the guardrail, coordinates of an end point of the guardrail, whether there is a boundary spot for moving to a roadway, and coordinates of the boundary spot. When the mobile object 1 travels, the road type recognizing unit 120 recognizes that the mobile object 1 is traveling on a walkway (that is, the road type is a walkway), for example, when a distance of a straight line between coordinates of the position information of the mobile object 1 and coordinates of a start point and an end point of a walkway with a walkway ID is less than the corresponding road width with reference to the walkway map information 73 using the position information of the mobile object 1 measured by the positioning device 18. In more general, the road type recognizing unit 120 may recognize that the mobile object 1 is traveling on a walkway when a distance of a straight line between coordinates of the position information of the mobile object 1 and coordinates of a start point and an end point of a walkway with a walkway ID is less than a predetermined value.

The map updating unit 160 compares walkway map information newly generated by the map generating unit 150 with the walkway map information 73 and updates the walkway map information 73 with the walkway map information generated by the map generating unit 150 as newest information when records in a certain row are different. In order to perform this update, the map updating unit 160 needs to identify a walkway ID of the walkway map information 73 corresponding to the walkway map information newly generated by the map generating unit 150. In this regard, for example, a distance between coordinates of start points or a distance between coordinates of end points can be calculated and a walkway ID in which the calculated distance is less than a threshold value can be identified as the corresponding walkway ID.

When sensing accuracy of the external sensing device is equal to or less than a reference value, the map updating unit 160 may not update the walkway map information 73. For example, when the object recognizing unit 130 recognizes a rainfall from an image captured by the external camera and a proportion of rain droplets in the image is equal to or greater than a threshold value, it may be determined that the sensing accuracy of the external sensing device is equal to or less than the reference value. For example, when the object recognizing unit 130 measures illuminance of an image captured by the external camera and the measured illuminance is equal to or less than a threshold value, it may be determined that the sensing accuracy of the external sensing device is equal to or less than the reference value. For example, the map updating unit 160 may acquire weather data from an external weather data delivery service via an API in real time and determine that the sensing accuracy of the external sensing device is equal to or less than the reference value when the weather data indicates a rainfall. In this way, by avoiding update of the walkway map information 73 at a timing at which the sensing accuracy of features in a predetermined area is assumed to be low such as in the bad weather or in the nighttime, it is possible to secure the accuracy of the walkway map information 73.

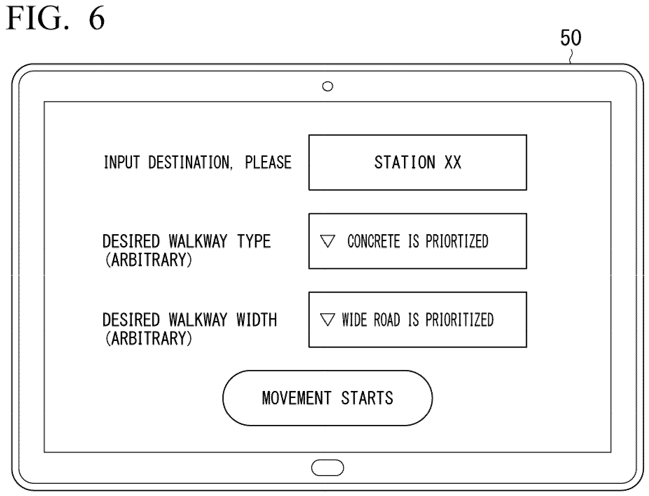

The walkway map information 73 may be used for routing when the mobile object 1 is caused to travel in the automatic driving mode. FIG. 6 is a diagram illustrating an example of a method of using the walkway map information 73 for routing. When the mobile object 1 is caused to travel in the automatic driving mode, the external notification device 50 may receive request information on a walkway on which the mobile object 1 is traveling from an occupant of the mobile object 1 via a display and cause the mobile object 1 to travel according to the received request information.

For example, as illustrated in FIG. 6, the external notification device 50 may receive request information on a walkway on which the mobile object 1 is traveling and a type of the walkway from an occupant of the mobile object 1, and the control unit 140 may determine a travel route of the mobile object 1 such that the mobile object 1 preferentially travels on the requested type of walkway. For example, the external notification device 50 may receive request information on a width of a walkway on which the mobile object 1 is traveling from an occupant of the mobile object 1, and the control unit 140 may determine a travel route of the mobile object 1 such that the mobile object 1 preferentially travels on the walkway with the requested width. In FIG. 6, since the occupant of the mobile object 1 inputs "concrete is prioritized" as a desired walkway type and inputs "a broad road is prioritized" as a desired walkway width, the control unit 140 determines the travel route such that the mobile object 1 preferentially travels on a walkway of which the road type is "concrete" and the road width is "d3" In the walkway map information 73.

For example, the external notification device 50 may receive information indicating that the mobile object 1 preferentially travels on a walkway with a public open space or preferentially travels on a walkway with a guardrail as request information from the occupant of the mobile object 1. Accordingly, it is possible to enhance the occupant's satisfaction in traveling of the mobile object 1.

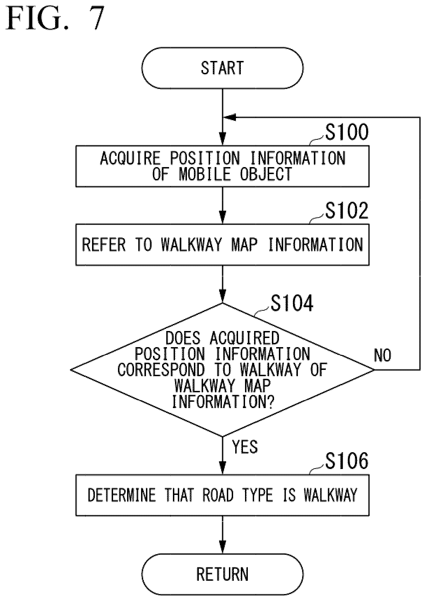

A process flow that is performed by the road type recognizing unit 120 will be described below with reference to FIG. 7. FIG. 7 is a flowchart illustrating an example of a process flow that is performed by the road type recognizing unit 120.

First, the road type recognizing unit 120 acquires position information of the mobile object 1 measured by the positioning device 18 (Step S100). Then, the road type recognizing unit 120 refers to the walkway map information 73 using the acquired position information (Step S102) and determines whether there is a walkway with a walkway ID corresponding to the position information of the mobile object 1 (Step S104).

When it is determined that there is no walkway with a walkway ID corresponding to the position information of the mobile object 1, the road type recognizing unit 120 returns the process flow to Step S100. On the other hand, when it is determined that there is a walkway with a walkway ID corresponding to the position information of the mobile object 1, the road type recognizing unit 120 determines that the road type of the road on which the mobile object 1 is t^{r}aveling as a walkway (Step S106). As a result, the process flow of the flowchart ends.

In the process flow of the flowchart, when it is determined in Step S104 that there is no walkway with a walkway ID corresponding to the position information of the mobile object 1, the road type recognizing unit 120 does not return the process flow to Step S100, but may recognize the road type on the basis of an image captured by the external camera or recognize the road type with reference to the navigation map information 72. Recognition of the road type based on the walkway map information 73, recognition of the road type based on an image captured by the external camera, and recognition of the road type based on the navigation map information 72 may be combined. For example, when it is determined that the road type is a walkway on the basis of the walkway map information 73 and it is determined that the road type is a walkway on the basis of an image captured by the external camera, the road type recognizing unit 120 may definitely recognize that the road type is a walkway.

According to the aforementioned embodiment, when a mobile object moves on a walkway, the mobile object generates a walkway map on the basis of an image captured by the external camera of the external sensing device 10 and uses the generated walkway map for routing. Accordingly, it is possible to provide walkway information with high convenience for a mobile object that can travel on both a roadway and a walkway.

The aforementioned embodiment can be mentioned as follows:
A mobile object control device comprising:
a storage medium storing computer-readable instructions; and
a processor connected to the storage medium,
wherein the processor executes the computer-readable instructions to perform:
   recognizing whether a mobile object is moving on a roadway or in a predetermined area on the basis of map information in which features of the predetermined area are correlated with positions; and
   limiting a speed of the mobile object when the mobile object moves on the roadway to a first speed and limiting the speed of the mobile object when the mobile object moves in the predetermined area to a second speed lower than the first speed.

While an embodiment of the present invention has been described above, the present invention is not limited to the embodiment and can be subjected to various modifications and substitutions without departing from the gist of the present invention.

### [Reference Signs List]

10 External sensing device
12 Mobile object sensor
14 Operator
16 Internal camera
18 Positioning device
22 Mode switch
30 Moving mechanism
40 Drive mechanism
50 External notification device
70 Storage device
100 Control device
120 Road type recognizing unit
130 Object recognizing unit
140 Control unit
150 Map generating unit
160 Map updating unit

## Claims

1. A mobile object control device for a mobile object that is able to move both on a roadway and in a predetermined area other than a roadway, the mobile object control device comprising:
a road type recognizing unit configured to recognize whether the mobile object is moving on the roadway or in the predetermined area on the basis of map information in which features of the predetermined area are correlated with positions; and
a control unit configured to limit a speed of the mobile object when the mobile object moves on the roadway to a first speed and to limit the speed of the mobile object when the mobile object moves in the predetermined area to a second speed lower than the first speed.

2. The mobile object control device according to claim 1, further comprising a map updating unit configured to update the features of the predetermined area included in the map information when the features of the predetermined area included in the map information are different from features of the predetermined area sensed by an external sensing device at the time of movement of the mobile object.

3. The mobile object control device according to claim 2, wherein the map updating unit does not update the features of the predetermined area included in the map information when sensing accuracy of the external sensing device is equal to or less than a reference value.

4. The mobile object control device according to claim 1, wherein the map information includes information on a type or a width of the predetermined area as the features of the predetermined area.

5. The mobile object control device according to claim 4, wherein the control unit determines a route along which the mobile object moves on the basis of request information on the type or the width of the predetermined area and the map information when the request information input by an occupant of the mobile object is received.

6. The mobile object control device according to claim 1, wherein the map information includes information on an open space or a guardrail adjacent to the predetermined area as the features of the predetermined area.

7. The mobile object control device according to claim 1, wherein the map information includes information on a traversable boundary spot between the roadway and the predetermined area as the features of the predetermined area.

8. A mobile object control method that is performed by a computer for controlling a mobile object that is able to move both on a roadway and in a predetermined area other than a roadway, the mobile object control method comprising:
recognizing whether the mobile object is moving on the roadway or in the predetermined area on the basis of map information in which features of the predetermined area are correlated with positions; and
limiting a speed of the mobile object when the mobile object moves on the roadway to a first speed and limiting the speed of the mobile object when the mobile object moves in the predetermined area to a second speed lower than the first speed.

9. A storage medium storing a program causing a computer for controlling a mobile object that is able to move both on a roadway and in a predetermined area other than a roadway to perform:
recognizing whether the mobile object is moving on the roadway or in the predetermined area on the basis of map information in which features of the predetermined area are correlated with positions; and
limiting a speed of the mobile object when the mobile object moves on the roadway to a first speed and limiting the speed of the mobile object when the mobile object moves in the predetermined area to a second speed lower than the first speed.
